# EUROPEAN PATENT SPECIFICATION

(11) **EP 1 541 027 B1**
(45) Date of publication and mention of the grant of the patent: **26.11.2008**
(21) Application number: 03078925.9
(22) Date of filing: 11.12.2003
(51) Int. Cl.: A21D 8/04

(54) **A process for producing bread with extended shelf life, bread dough and bread improver composition for producing such bread**
Verfahren zur Herstellung von Brot mit verbesserter Haltbarkeit, Brotteig und Backmittelzusammensetzung für die Herstellung des besagten Brotes
Procédé pour la préparation de pain avec une conservation prolongée, pâte boulangère et améliorant de panification destinés à la préparation du dit pain

(43) Date of publication of application: 15.06.2005
(73) Proprietor: Bakery Technology Centre B.V., 4845 CR Wagenberg (NL)
(72) Inventor: Sturkenboom, Marcellus Gerardus, 3991 PX Houten (NL); De Levita, Paul David, 3972 EE Driebergen-Rijsenburg (NL); Van Duijnhoven, Antonius A. G., 4845 CR Wagenberg (NL)
(74) Representative: Prins, Adrianus Willem

(56) References cited:
- EP-A- 0 585 988
- WO-A-91/04669
- WO-A-99/53769
- US-A- 4 567 046
- US-A1- 2003 180 418
- US-B1- 6 365 204

## Description

The present invention relates to a process for producing bread. The present invention also relates to a bread dough which can be used in the process according to the present invention. Further, the present invention relates to a bread improver composition which can be used in the process for producing bread according to the present invention and to a bread with a long shelf-life.

During storage from the time of baking the bread to the time of consumption the softness of bread decreases and the organoleptic properties deteriorate so that the quality of the bread does not longer meet the standard requirements. This undesirable change in the quality of the bread is described by the term staling. The staling process is characterized by an increase in the firmness and a decrease in the elasticity of the crumb of the bread. Also the organoleptic properties of the crust rapidly diminish upon prolonged storage of the packaged bread at ambient conditions.

In order to obtain bread with a shelf life of 3-5 days and a bread quality which meets the standard requirements, it has been proposed to use emulsifiers in the manufacturing process, such as monoglycerides or calcium stearoyl lactylate, to improve dough strength and crumb softness and to remedy staling. If the emulsifiers are omitted, however, usually at best bread having an average shelf life of at most 3 days can be obtained. Moreover the quality of the bread without emulsifiers is rapidly deteriorating upon storage. It is advantageous, however, to delete the emulsifiers, since they are considered to be chemical additives by the public.

Therefore there is still a great need for a bread production process on commercial factory scale in which preferably no emulsifiers are used and yet leads to bread with a long shelf life and which bread also after long storage meets the standard quality requirements.

It has also been proposed to increase the levels of fat or shortening used in the manufacture of bread so as to achieve a longer shelf life, but the amount to be used to achieve appreciable benefits is rather high, which is unacceptable from a health point of view. Furthermore the use of thickening agents to increase the shelf life of commercially produced bread has been proposed, but this use leads to inferior organoleptic quality of the bread.

Finally it has been proposed to retard the staling of bread without adversely affecting the required organoleptic properties by adding enzymes or enzyme mixtures during the commercial bread production process. It has been reported that thus the organoleptic properties of the bread can be improved.

Thus, it has been proposed in EP-A-0 585 988 (Gist-Brocades NV) to use a mixture of lipase, hemicellulase and amylase, preferably in combination with shortening, to avoid the use of emulsifiers in the bread manufacture process. In the examples given in this patent, the obtained bread is stored for 3 days in polyethylene bags at room temperature. Nowhere in this patent a shelf life of longer than 3 days has been suggested or indicated however. Only changes in crumb firmness are indicated, but there is no indication or suggestion of the organoleptic and further physical properties of the bread after 3 days storage.

Furthermore it has been proposed in WO 99-53769 (Novonordisk AS) to use a combination of an anti-staling amylase (such as maltogenic alpha-amylase (Novamyl)) to reduce the rate of crumb firming during storage and a phospholipase to improve the softness in the first 24 hours after baking. After 2 days storage the firmness has already markedly increased. There is no suggestion or indication whether the use of the combination of the two enzymes leads to a shelf-life of the bread beyond 7 days.

US 2003 180 418 relates to the use of lipase to improve a property of dough or bread. Other enzymes may be added. The examples only show firmness and elasticity during the first 24 hours after baking. The results show that already within the first day firmness increases drastically, whereas elasticity goes down considerably.

US 6 365 204 relates to the use of an antistaling amylase and a phospholipase to improve initial softness, in particular in the first 24 hours.

US 4 567 046 relates to the use of a phospholipase that is free of lipase and protease to improve the quality of dough or bread.

There is still a need for a process on commercial industrial scale for producing bread having a relatively long shelf life of at least 7 days and satisfactory organoleptic and physical properties (such as a bread without unacceptable decreasing crumb elasticity, softness and/or freshness within a period of at least 7 days) and preferably without using added emulsifiers and added thickening agents or increasing the amount of conventional additives (such as fats and/or sugar), above the conventionally used levels in the commercial production of bread

After extensive experiments it has now been found that a commercial process for producing bread can be effected by the conjoint use of a complex enzyme mixture and one or more selected enzymes in the bread dough or a bread dough ingredient.

Accordingly the present invention relates to a process for producing bread, said process being suitable for obtaining a bread having a shelf-life of at least 15 days, as defined in claim 1. The complex enzyme mixture may further comprise at least one additional enzyme selected from the group consisting of amylo-glucosidases, glycolipases, hemicellulases, lipases, hexose oxidases and transglutaminases.

The mixing of the dough ingredients can be done by any means known in the art, e.g. by a straight dough method, as is often applied in Europe or a sponge and dough method, as is commonly applied in the USA. Very good results have been achieved with a sponge and dough method. Herein first part of the ingredients is mixed to form a first dough, which is known as the sponge and thereafter the rest of the ingredients are added to the sponge and mixed to form the final dough that is to be baked. It has been found that a bread baked from a dough that is prepared by such a sponge and dough method has a particularly fine structure, a soft texture and a very well appreciated taste.

The dough can be baked under conditions known in the art. A process according to the invention is in principle suitable for any kind of bread and in particular for yeast fermented bread, such as white bread. Usually the dough is based upon flour - preferably wheat flour - water, yeast and optionally additives typically used in the art.

It has been found that the present invention provides a process for producing bread with a relatively long shelf-life, of preferably 15-30 days. The shelf-life of a wheat based bread as used herein is defined as the period during which, starting from the manufacture of the bread, the compressibility as measured by a Stevens texture analyser of a bread is 1100 or less, preferably 800 or less, more preferably less than 700 units, when the bread is stored under ambient conditions (20 °C). At a higher value, the bread is not soft enough anymore and past its shelf-life. More details about the Stevens analyser are presented in the examples.

It has been found that the invention allows the manufacture of a bread with a satisfactory loaf volume. For example, a typical loaf of bread (e.g. white wheat bread) with a mass of about 700 g rises to a volume of at least about 3200 ml at the end of the baking process. In other terms, a typical loaf of bread has a specific volume of at least 4.5. Preferably the specific volume is in the range of 5.5 to 7.5 ml/g.

Other desirable quality aspects, such as the structure (which should not be too course, preferably fine or silky) resilience and organoleptic properties, are usually expressed in panel scores.

Such a bread can be produced according to the invention with a dough that is essentially free from added emulsifiers, including from phospholipids, e.g. lecithin, and/or free from added thickening agents and/or having no increased levels of fat.

The enzymes in the complex enzyme mixture and the selected additional enzyme(s) are preferably of microbial origin.

Preferred examples of the amylase (other than the maltogenic amylase) are amylases of Aspergillus oryzae and of Aspergillus niger. Also suitable are bacterial amylase e.g., originating from Bacillus amyloliquefaciens, Bacillus licheniformis, Bacillus thermoproteolyticus, Bacillus stearothermophilus. A preferred bacterial amylase is amylase of Bacillus subtilis.

A preferred maltogenic amylase is maltogenic amylase of Bacillus stearothermophilus.

Suitable xylanases include fungal xylanases, such as xylanase of Aspergillus oryzae , Aspergillus awamori, Trichoderma viride. Trichoderma reesei, Aspergillus foetidus, and - preferably - of Aspergillus niger.

Bacterial xylanase, e.g. of: Bacillus amyloliquefaciens, Bacillus licheniformis and Bacillus subtillus are also suitable, of which Bacillus subtillus is preferred.

A preferred mannase is mannase of Aspergillus niger.

Suitable sources for phospholipase and other lipases include Aspergillus niger, Rhizopus oryzae, Rhizopus oryzae, Rhizopus delemar, Candida , Trichoderma reesei. Very good results have been achieved with phospholipase and optionally lipase of Aspergilus oryzae.

Examples of pentosanases are those originating from Humicola faecalis and preferably from Trichoderma reesei.

Suitable cellulases include cellulases of Trichoderma reesei, Trichoderma viride, Aspergillus oryzae and Aspergillus niger of which Aspergillus niger is preferred.

Protease, such as peptidase, may for example be obtained from Trichoderma reesei, Rhizopus oryzae or Aspergillus oryzae. A preferred source for protease, such as peptidase, is Aspergillus niger.

Glucose oxidase may for example be obtained from Penicillium chrysogenum. A preferred source is Aspergillus niger.

Examples of amyloglucosidases are amyloglucosidases from Rhizopus oryzae, Rhizopus delemar and Aspergillus niger, of which Apergillus niger is preferred.

Some of these enzymes have in isolation been proposed as bread improving agents, but it has been found in experiments that the combined action of the constituent enzymes of the complex mixture and the selected additional enzyme(s) is a kind of interlocking action, i.e. deletion of a constituent enzyme of the complex mixture has a negative influence on the combination of achieved effects, viz. extended shelf life concomitant with excellent bread quality and good organoleptic and physical properties. It has also been found that by the choice of enzymes, the processibility of the bread can be improved. For example it has been found that by using protease, in particular peptidase the dough handling is improved (in particular improved rheological properties), besides a positive effect on the shelf-life.

Addition of one and preferably of more of the selected additional enzymes to the complex enzyme mixture has been found to have a very beneficial effect on the shelf life of the produced bread, whilst retaining the excellent bread quality.

Very good results have been achieved with a mixture comprises xylanase and hemicellulase.

Hexose oxidase, transglutaminase or a combination thereof have been found to have a beneficial effect in a process, dough, or enzyme mixture according to the invention, for example with respect to the dough processing properties. It has further been found that these enzymes can be used to obtain a bread with a highly satisfactory fine to silky structure. These enzymes have also been found to have a positive effect on the shelf-life of a bread.

With regard to the respective amounts of the constituent enzymes of the complex enzyme mixture and of the selected additional enzyme(s), it is observed that in general the enzyme manufacturers and suppliers indicate preferred ranges to achieve optimal effects for the required food use of the enzyme. The complex enzyme mixture can e.g. commercially be obtained at Innovative Baking Technology BV (IBT), Made, The Netherlands. The total amount of complex enzyme mixture and selected additional enzyme(s) to be used in the process according to the present invention may vary on the circumstances, such as the intended result and the specific activity of the various enzymes in a specific enzyme mixture. Effective and optimal amounts of the various enzymes can be determined by routine experiments, by the man skilled in the art e.g. on hand of the data provided by the supplier or on the basis of common general knowledge. If for example for the complex enzyme mixture and the additional enzyme(s) products of IBT are used, then generally the total amount of the complex enzyme mixture and the additional enzyme(s) is from 200 parts per million (ppm) to 1000 ppm, preferably from 250 ppm to 400 ppm based on the weight of the flour.

Although in the process according to the present invention fat can be added, it is preferred to add no fat. The term "fat", is used herein to describe fatty substances such as fatty acids and fatty acid esters of vegetable or animal origin that are solid at 20 °C. An example of a suitable fat is lard. Fats may be added as such or in the form of a shortening, i.e. a composition comprising fat (which may be modified) and optionally additives. It is stressed that oil (typically of vegetable or animal origin), which may be added in a typical concentration of up to 3 wt % based on the weight of the dough to improve the processing of the dough, is not regarded as added fat. Suitable examples of such oils are soy bean oil, sunflower oil, rape seed oil etc. It is has been found that addition of such oil does not tend to affect the shelf-life to a significant extent.

The fat level in a particular product may thus vary, depending upon the type of product. In general the amount of fat in a conventional product will be less than 20 %. Good results, in terms of a long shelf-life and a good bite, have been obtained with a process according to the invention wherein a bread is made with less than 6 % fat. A process according to the invention has been found very suitable for making a bread comprising less than 1 % fat. In fact, it has been found possible to manufacture a bread with a shelf-life of at least 7 days, preferably at least 15 days, without adding any fat.

The present invention therefore provides a commercial process to produce bread which is essentially free from added emulsifiers, thickening agents and/or fat and which yet has an unprecedented shelf life of at least 15 days to 30 days. By the expression "essentially free of a specific component" (e.g. emulsifier or fat) is understood throughout this specification and the appended claims that addition of an extra amount of that component (e.g. emulsifier or fat) is not required beyond the amount that is naturally present in the flour used to make the dough. It is stressed that for practical reasons in a process, a bread dough, a bread or a bread improver composition according to the present invention an effective amount of fat, thickening agent, and/or emulsifier may be used. Examples of suitable emulsifiers include mono- and/or diglycerides, diacetyl tartaric acid ester of mono- and/or diglycerides and the like. However, the invention particularly and preferably relates to a process, a bread dough, a bread and a bread improver composition in which no emulsifiers are added.

The strong positive action of the complex enzyme mixture and the selected additional enzyme(s) in the process of manufacturing bread according to the present invention can be such that the shelf life of the bread is increased to such an extent that the general quality of the bread is still good according to the official standards, but the flavour and/or aroma of the bread is diminishing. To remedy this, an effective amount of a bread flavouring agent or a bread flavour enhancing agent is added to the dough or to a dough ingredient. Also bread flavouring agent precursors may be used or a mixture of bread flavouring agents and/or bread flavour enhancing agents and/or their respective precursors. Suitable examples of such agents include furanones (e.g. 4,5-Dimethyl-3-hydroxy-2,5-dihydrofuran-2-one ), alcohols and iso-alcohols, lactones, (e.g. gamma-nonalacton), phenolic esters, esters of fatty acids, in particular esters of lower fatty acids (e.g. having up to eight carbon atoms, preferably four to eight carbon atoms), diacetyl, 4-cis-heptanal and its precursors and small amounts of nitrogen and sulphur containing compounds. A preferred mixture is the bread flavouring agent Dorome 25 ™ (ex Innovating Food Technology BV (IFT), Made, The Netherlands). If Dorome 25 is used, effective amounts of this bread flavouring agent are from 100 ppm to 2000 ppm, preferably from 200 ppm to 500 ppm, based on the weight of the flour.

Bread flavouring agents that may be used are for example those described in J. Agric. Food Chem 1998, 46, 2721-2726 and in Cereal Chem. 74(2):91-97 and agents known in the art.

The present invention also relates to a bread dough, which comprises a complex enzyme mixture such as specified above.

The enzymes in the complex enzyme mixture and the selected additional enzymes preferably are of microbial origin. With regard to the respective amounts of the constituent enzymes of the complex enzyme mixture and the total amount of the complex enzyme mixture and the selected additional enzyme(s), the same observations as made herebefore with regard to the process of producing the bread according to the present invention apply

The bread dough according to the present invention generally comprises a cereal meal or flour, such as wheat flour, but may also comprise other types of flour, such as corn flour, rye flour and the like. The dough further comprises water and yeast and a bread improver composition according to the present invention. The dough may also comprise fat or shortening, but preferably the dough does not contain added fat (or only such an amount of fat as is necessary for its mechanical manufacture), salt, sugar and other conventional dough ingredients, such as proteins, eggs, oxidants, amino acids, preservatives and the like. The dough may also be in frozen form.

The bread dough according to the present invention may also comprise an effective amount of a bread flavouring agent or a bread flavour enhancing agent and/or precursors of these agents, as indicated above.

The bread dough according to the present invention is preferably essentially free from emulsifiers. Preferably the dough is essentially free from thickening agents. A highly preferred dough has no increased levels of fat and/or sugar, compared to conventional bread dough.

The present invention also relates to a process for producing bread in which a bread dough according to the present invention is formed and baked.

The present invention further relates to a bread having a shelf-life of at least 15 days, according to claim 24. In particular the present invention also relates to a bread having a shelf-life of 15-22 days.

The shelf-life is defined herein as the period between baking of the bread and the moment at which the crumb firmness as measured by a Stevens texture analyser reaches a value of 1100, when the bread is stored at 20 °C. Preferably the bread has a crumb firmness after 7 days of 800 or less, more preferably of 700 or less.

In particular the invention relates to a bread, essentially free of added emulsifiers, having a shelf-life of at least 15 days.

Preferably a bread according to the invention is does not contain added fat or added thickening agent.

The bread is wheat based. The bread may contain other cereals, e.g., rye and/or corn, and is usually a yeast fermented bread. A preferred bread according to the invention is a wheat based white bread. The bread may have any form. Particular good results have been obtained with buns,(rolls) and loaves, of which loaves are preferred.

A bread according to the invention has been found to have a satisfactory structure and volume. Preferably the specific volume is in the range of 5.5. to 7.5 ml/g.

The present invention also relates to a bread improver composition according to claim 20. The complex enzyme mixture may further comprise at least one additional enzyme selected from the group consisting of amylo-glucosidases, glycolipases, hemicellulases and lipases. The respective amounts of the constituent enzymes of the complex enzyme mixture and of the selected additional enzyme(s), as well as the total amount of enzymes are the same as those in the process according to the present invention for producing bread and for the bread dough according to the present invention.

A bread improver composition according to the invention may further comprise a carrier, i.e. an component that has no substantial enzyme activity. Suitable carriers are known in the art and include inter alia sugar, flour, starch, dry milk constituents and salts.

The enzymes in the complex enzyme mixture and the selected additional enzymes of the bread improver composition preferably are of microbial origin.

The bread improver composition may also comprise an effective amount of a bread flavouring agent or a bread flavour enhancing agent or a precursor of these agents, such as those indicated above, e.g. in amounts as indicated above.

The bread improver composition according to the present invention preferably is in the form of a powder and its particle size distribution preferably is such that more than 80 % by weight has a particle size of from 50 to 500 micrometer. The bread improver composition in powder form may be prepared by manners known per se, such as spraying the enzymes onto an innocuous carrier material.

The bread improver composition may also comprise other conventional dough ingredients, such as proteins, amino acids, salt, preservatives, oxidants, pH-control agents, antimycotic agents and mixtures thereof.

The present invention is now further demonstrated by the following examples.

### Examples 1-5 (Ref)

For the manufacture of bread a so-called American Sponge & Dough method was used according to recipe and processing which is specified below.

**Table 1: USA Sponge & dough_**

| **Recipe ingredients** | **Sponge wt %** | **Dough wt %** |
|---|---|---|
| USA flour | 58 | 42 |
| Water | 35 | 23 |
| Fermipan Brown | 2 | 1 |
| Ammonium sulphate | 0,02 | - |
| Ascorbic acid | 0.0025 | - |
| Salt | - | 2 |
| HFCS (73 % solids, 85 % fructose) | - | 15 |
| Oil | - | 3 |
| Rotox | - | 0,05 |
| Enzyme mix (varying composition) | - | varying (see below) |

The sponge was prepared by mixing the above identified components in the specified proportions. The resultant sponge was slowly mixed for 3 min fast for 2 min in a Spiral mixer at a temperature of 24 °C.

Thereafter additional ingredients were added to the sponge to obtain a dough as specified in the table above.. The dough was mixed at high speed in a Morton-Z-blade mixer at a temperature of 26 °C.

The dough was put through a short extruder (meat mill).

700 g.of dough was rounded up softly by hand and then proofed for 6 min. at room temperature. The dough was then moulded with a "Mono" (Walls; 5 Pressure belt; 8 Conductors; 11).

The moulded dough was then subject to a final proofing of 70 min. at 40°C and 80 % R.H, whereafter it was baked for 21 min in an oven having a top temperature of 200 °C and a floor temperature of 250 °C.

After cooling to room temperature the loaves were stored in polyethylene bags at room temperature.

A shock test was carried out with a modified JEL shaking machine (ex J.Engelsman, Ludwigshafen, Germany) for 5 seconds. The results of the shock test (proofing tolerance) were assessed by an expert panel using the following rating: 1 = very bad, 2 = bad, 3 = very moderate, 4 = moderate, 5 = hardly acceptable, 6 = acceptable, 7 = fair, 8 = good, 9 = very good and 10 = excellent.

The softness of the bread was assessed by an expert panel, using the same rating as for the proofing tolerance.

The crumb firmness (or softness) was measured using a modified Stevens Texture Analyser. Two slices of 2 cm thickness from the centre of each loaf were tested by means of the texture analyser using a probe of 1.5 inch diameter, a compression depth of 5 mm (25%) and at a rate of compression of 0.5 mm/sec.

In all Examples 1-5, 200 ppm of a complex enzyme mixture (indicated as Capzyme 252™ , IBT, Made, The Netherlands) was used, providing 40 ppm maltogenic alpha-amylase, 10 ppm fungal amylase, 45 ppm phospholipase, 30 ppm protease (peptidase) and 75 ppm carrier (flour) to the dough.

In Example 2 additionally 100 ppm IBT Softase B^{™} (IBT) were used. This product essentially consisted of 30 wt% bacterial amylase and 70 wt% carrier.

In Example 3 additionally 100 ppm IBT Softase B Super^{™}; (IBT) were added, which consisted of 30 wt% bacterial amylase, 30 wt % xylanase and 40 wt% carrier.

In Example 4 additionally 100 ppm of IBT Doughase^{™} (ex IBT) were used, which product consisted of 30 wt % xylanase and 70 wt % carrier.

In Example 5 additionally 10 ppm xylanase, 20 ppm bacterial amylase, 5 ppm mannase, 20 ppm glucose oxidase, 10 ppm cellulase, 5 ppm pentosanase and 80 ppm carrier (provided as 150 ppm of a mixture of IBT Softase XXL (Trade Mark); ex IBT, Made, The Netherlands) were used.

The results are summarized in the Table 2. From these results it is clear that in selecting more than one additional enzyme according to the present invention the results are accordingly better.

### Examples 6-8

Bread was prepared as described in Example 1, but now a bread flavouring agent (Dorome 25^{™}, ex IFT) was added in amounts of 200 ppm, 600 ppm and 1200 ppm respectively. Also the aroma development of the bread upon storage in polyethylene bags at room temperature was assessed by an expert panel, using the following rating:
2 = strong stale aroma, 3 = strong off taste/stale 4 =off taste/stale, 5 = off taste/spongy aroma, 6 = spongy aroma, 7 = lightly stale or slightly spongy aroma 8 = rather good like fresh bread and 9 = aroma like fresh bread (= 3 days)

The physical properties of the bread upon storage were as reported for example 5, whereas the development of the type of aroma and its assessment by the expert panel are summarized in Table 3.

### Examples 9-12 (Ref)

Breads were baked as described for Example 1, but with different enzyme mixes. For each of the breads an enzyme mix comprising only three out of the four enzymes of the IBT-base of Example 1 (maltogenic alpha-amylase, fungal amylase, phospholipase and protease) was used. Table 4 shows the results for each different combination of enzymes.

| **Table 2: Baking tests with examples 1, 2, 3, 4 and 5** | | | | | | |
|---|---|---|---|---|---|---|
| | | Example 1 (Ref) | Example 2 (Ref) | Example 3 (Ref) | Example 4 (Ref) | Example 5 (Ref) |
| Capzyme 252 | | 200 ppm | 200 ppm | 200 ppm | 200 ppm | 200 ppm |
| IBT Softase B | | | 100 ppm | | | |
| IBT Softase super | | | | 100 ppm | | |
| IBT Doughase X | | | | | 100 ppm | |
| IBT Softase XXL | | | | | | 150 ppm |
| **Dough handling** (by expert panel) | | good | good | good | good | very good |
| **Proofing tolerance#** (with shock test) | | 6 | 6 | 8 | 8 | 10 |
| **Loaf volume** in ml | | 3400 cc | 3450 cc | 3850 cc | 3800 cc | 3950 cc |
| **Texture** | | irregular open | irregular coarse | regular open | regular fine | regular silky/fine |
| **Softness** | | | | | | |
| assesment by panel | | | | | | |
| | day 3 | 8 | 9** | 10** | 9 | 10 |
| | day 7 | 5 | 7** | 8 | 6 | 10 |
| | day 11 | 3 | 6 | 7 | 4 | 9 |
| | day 16 | 1 | 4 | 5 | 2 | 8 |
| | day 22 | 1 | 3 | 4 | 1 | 8 |
| | day 30 | 1 | 3 | 4 | 1 | 7 |
| ** poor resilience. | | | | | | |
| **Crumb firmness** | | | | | | |
| (g) by texture analyzer | | | | | | |
| | day 3 | 420 | 370 | 340 | 365 | 310 |
| | day 7 | 760 | 580 | 420 | 660 | 320 |
| | day 11 | 1190 | 670 | 580 | 970 | 380 |
| | day 16 | 1980 | 1010 | 810 | 1300 | 440 |
| | day 22 | 2050 | 1190 | 990 | 1970 | 510 |
| | day 30 | 2030 | 1270 | 990 | 2050 | 620 |
| * crumb is braking | | | | | | |

| | | | | | | |
|---|---|---|---|---|---|---|
| Example 1 = Capzyme 252containing maltogenic amylase, fungal amylase, (phospho) lipase, protease Example 2 = Capzyme 252+ IBT Softase B, containing bacterial amylase Example 3 = Capzyme 252+ IBT Softase B super containing bacterial amylase + xylanase. Example 4 = Capzyme 252+ IBT Doughase X containing xylanase Example 5 = Capzyme 252+ IBT Softase XXL containing xylanase, bact. Amylase, mannase, glucose oxidase, cellulase, pentosanase. | | | | | | |

| **Table 3: Baking tests with examples 6 - 8** | | | | | |
|---|---|---|---|---|---|
| | | **Example 5 (Ref)** | **Example 6** | **Example 7** | **Example 8** |
| Capzyme 252s | | 200 ppm | 200 ppm | 200 ppm | 200 ppm |
| IBT Softase XXL | | 150 ppm | 150 ppm | 150 ppm | 150 ppm |
| IBT Dorome 25 | | | 200 ppm | 600 ppm | 1200 ppm |
| | | **Example 5** | **Example 6** | **Example 7** | **Example 8** |
| **Aroma*** | day 3 | propionate | neutral | slightly spongy | strong flavour |
| | day 7 | propionate + | rather neutral | slightly spongy | strong flavour |
| | | "stale" aroma | (fresh bread) | | |
| | day 11 | propionate + | rather neutral | neutral | rather strong |
| | | "stale" aroma | (fresh bread) | (fresh bread) | flavour |
| | day 16 | "stale" aroma | slightly "stale" | neutral | spongy aroma |
| | | | aroma | (fresh bread) | |
| | day 22 | "stale" aroma | slightly "stale" | rather neutral | spongy aroma |
| | | (strong) | aroma | | |
| | day 30 | "stale" aroma | slightly "stale" | rather neutral | light spongy |
| | | (strong) | aroma | | aroma |
| | | | | | |
| **Aroma** ** | day 3 | 5 | 8 | 7 | 4 |
| | day 7 | 4 | 9 | 7 | 4 |
| | day 11 | 3 | 9 | 8 | 5 |
| | day 16 | 2 | 7 | 8 | 6 |
| | day 22 | 2 | 7 | 8 | 6 |
| | day 30 | 2 | 7 | 8 | 7 |

| | | | | | |
|---|---|---|---|---|---|
| * description by expert panel ** assessment by panel Example 5 = Capzyme 252+ IBT Softase XXL Example 6 = same as example 5 + 200 ppm Dorome 25 Example 7 = same as example 5 + 600 ppm Dorome 25 Example 8 = same as example 5 + 1200 ppm Dorome 25 | | | | | |

| **Table 4: Baking tests with examples 9, 10, 11, 12** | | | | | |
|---|---|---|---|---|---|
| | **Example 1 Ref** | **Example 9 Ref** | **Example 10 Ref** | **Example 11 Ref** | **Example 12 Ref** |
| Capzyme 252 (all enzymes) | 200 ppm | | | | |
| Capzyme 252, but no amylase | | 200 ppm | | | |
| Capzyme 252, but no | | | 200 ppm | | |
| phospholipase | | | | | |
| Capzyme 252, but no protease | | | | 200 ppm | |
| (peptidase) | | | | | |
| Capzyme 252, but no malto-genic | | | | | 200 ppm |
| amylase | | | | | |
| **Dough handling** (expert panel) | good | good | slightly sticky | bucky | good |
| **Proofing tolerance#** (with shock test) | 6 | 6 | 3 (rejected) | 5 | 6 |
| **Loaf volume** in ml | 3400 | rejected (2960) | rejected (2840) | 3200 | 3400 |
| **Texture** | irregular open | rejected | rejected | coarse | rather coarse |
| | | very coarse | very coarse | | |
| **Softness** | | | | | |
| assesment by panel | | n/a | n/a | | |
| day 3 | 8 | | | 7 | 8 |
| day 7 | 5 | | | 4 | 1 |
| day 11 | 3 | | | 3 | 1 |
| day 16 | 1 | | | 1 | 1 |
| day 22 | 1 | | | 1 | 1 |
| day 30 | 1 | | | 1 | 1 |
| ** poor resilience. | | | | | |
| **Crumb firmness** | | | | | |
| (g) by texture analyzer | | n/a | n/a | | |
| day 3 | 420 | | | 500 | 790 |
| day 7 | 760 | | | 960 | 1980 |
| day 11 | 1190 | | | 1350 | > 2200 |
| day 16 | 1980 | | | 1890 | > 2200 |
| day 22 | 2050 | | | 2100 | > 2200 |
| day 30 | 2030 | | | 2190 | > 2200 |

| | | | | | |
|---|---|---|---|---|---|
| Without amylase not acceptable : low volume Without maltogenic not acceptable softness properties Without (phospho) lipase not acceptable : coarse crumb texture, low volume Without protease (peptidase)not acceptable : difficult to handle dough | | | | | |

## Claims

1. A process for producing bread, the process being suitable for obtaining a bread having a shelf-life of at least fifteen days, the process comprising
- providing a dough based upon a flour,
- adding to the dough or to a dough ingredient a complex enzyme mixture, said complex enzyme mixture comprising a maltogenic amylase, a fungal amylase selected from amylases of Aspergillus oryzae and amylases of Aspergillus niger, a bacterial amylase, a phospholipase, a peptidase, a cellulase, a glucose-oxidase, a mannase, a pentosanase and a xylanase; and
adding an effective amount of a bread flavouring agent, a bread flavour enhancing agent or a precursor thereof to the dough or a dough ingredient.

2. A process according to Claim 1, in which the total amount of the complex enzyme mixture and the additional enzymes is from 100 parts per million (ppm) to 1000 ppm, based on the weight of the flour.

3. A process according to claim 1, wherein the total amount of the complex enzyme mixture and the additional enzymes is from 250 ppm to 400 ppm.

4. A process according to Claim 1, in which the bread is essentially free from added emulsifiers.

5. A process according to Claim 1, in which the bread is essentially free from added fat.

6. A process according to Claim 1, in which the bread is essentially free from added thickening agents.

7. A process according to claim 1, wherein the complex enzyme mixture further comprises at least one further enzyme selected from the group of amylo-glucosidases, glycolipases, hemicellulases and lipases.

8. A process according to claim 7, wherein the complex enzyme mixture comprises lipase from *Rhizopus oryzae.*

9. A bread dough comprising a complex enzyme mixture comprising maltogenic amylase, a fungal amylase selected from amylases of Aspergillus oryzae and amylases of Aspergillus niger, a bacterial amylase, a phospholipase, a peptidase, a cellulase, a glucose-oxidase, a mannase, a pentosanase and a xylanase.

10. A bread dough according to Claim 9, in which the total amount of the complex enzyme mixture and the additional enzymes is from 100 ppm to 1000 ppm.

11. A bread dough according to claim 9, wherein the total amount of the complex enzyme mixture is from 250 ppm to 400 ppm, based on the weight of the flour.

12. A bread dough according to Claim 10, comprising an effective amount of a bread flavouring agent or a bread flavour enhancing agent.

13. A bread dough according to Claim 9, in which the bread is essentially free from added emulsifiers.

14. A bread dough according to Claim 9, in which the bread is essentially free from added fat.

15. A bread dough according to Claim 9, in which the bread is essentially free from added sugar.

16. A bread dough according to Claim 9, in which the bread is essentially free from added thickening agents.

17. A bread dough according to claim 9, wherein the complex enzyme mixture further comprises at least one further enzyme selected from the group of amylo-glucosidases, glycolipases, hemicellulases and lipases.

18. A bread dough according to claim 17, wherein the complex enzyme mixture comprises lipase from *Rhizopus oryzae.*

19. A process for producing bread, which comprises forming a dough as claimed in Claim 9 and baking the dough.

20. A bread improver composition comprising a complex enzyme mixture comprising a maltogenic amylase, a fungal amylase selected from amylases of Aspergillus oryzae and amylases of Aspergillus niger, a bacterial amylase, a phospholipase, a peptidase, a cellulase, a glucose-oxidase, a mannase, a pentosanase, and a xylanase.

21. A bread improver composition according to Claim 20, comprising an effective amount of a bread flavouring agent or a bread flavour enhancing agent.

22. A bread improver composition according to claim 20, wherein the complex enzyme mixture further comprises at least one further enzyme selected from the group of amylo-glucosidases, glycolipases, hemicellulases and lipases.

23. A bread improver composition according to claim 20, comprising lipase from *Rhizopus oryzae.*

24. A bread obtainable by a process according to claim 19.

25. A bread according to claim 24, essentially free of added fat.

26. A bread according to claim 25, essentially free of added thickening agents.

## Patentansprüche

1. Verfahren zur Herstellung von Brot, wobei das Verfahren zum Erhalten eines Brotes mit einer Haltbarkeit von wenigstens fünfzehn Tagen geeignet ist, umfassend:
- Bereitstellen eines Teigs, der auf einem Mehl basiert,
- Zugeben eines komplexen Enzymgemischs zu dem Teig oder zu einem Teigingredienz, wobei das komplexe Enzymgemisch eine maltogene Amylase, eine pilzliche Amylase, ausgewählt aus Amylasen von Aspergillus oryzae und Amylasen von Aspergillus niger, eine bakterielle Amylase, eine Phospholipase, eine Peptidase, eine Cellulase, eine Glucoseoxidase, eine Mannase, eine Pentosanase und eine Xylanase umfasst; und
Zugeben einer wirksamen Menge eines Brot-aromatisierenden Mittels, eines Brotaroma-verstärkenden Mittels oder eines Vorläufers davon zu dem Teig oder einen Teigingredienz.

2. Verfahren nach Anspruch 1, bei dem die gesamte Menge des komplexen Enzymgemischs und der zusätzlichen Enzyme von 100 ppm ("parts per million") bis 1000 ppm, bezogen auf das Gewicht des Mehls, beträgt.

3. Verfahren nach Anspruch 1, wobei die gesamte Menge des komplexen Enzymgemischs und der zusätzlichen Enzyme von 250 ppm bis 400 ppm beträgt.

4. Verfahren nach Anspruch 1, bei dem das Brot im Wesentlichen frei von zugesetzten Emulgatoren ist.

5. Verfahren nach Anspruch 1, bei dem das Brot im Wesentlichen frei von zugesetztem Fett ist.

6. Verfahren nach Anspruch 1, bei dem das Brot im Wesentlichen frei von zugesetzten Verdickungsmitteln ist.

7. Verfahren nach Anspruch 1, wobei das komplexe Enzymgemisch ferner wenigstens ein weiteres Enzym, ausgewählt aus der Gruppe von Amyloglucosidasen, Glycolipasen, Hemicellulasen und Lipasen, umfasst.

8. Verfahren nach Anspruch 7, wobei das komplexe Enzymgemisch Lipase von *Rhizopus oryzae* umfasst.

9. Brotteig, der ein komplexes Enzymgemisch, umfassend maltogene Amylase, eine pilzliche Amylase, ausgewählt aus Amylasen von Aspergillus oryzae und Amylasen von Aspergillus niger, eine bakterielle Amylase, eine Phospholipase, eine Peptidase, eine Cellulase, eine Glucoseoxidase, eine Mannase, eine Pentosanase und eine Xylanase, umfasst.

10. Brotteig nach Anspruch 9, bei dem die gesamte Menge des komplexen Enzymgemischs und der zusätzlichen Enzyme von 100 ppm bis 1000 ppm beträgt.

11. Brotteig nach Anspruch 9, wobei die gesamte Menge des komplexen Enzymgemischs von 250 ppm bis 400 ppm, bezogen auf das Gewicht des Mehls, beträgt.

12. Brotteig nach Anspruch 10, umfassend eine wirksame Menge eines Brot-aromatisierenden Mittels oder eines Brotaroma-verstärkenden Mittels.

13. Brotteig nach Anspruch 9, wobei das Brot im Wesentlichen frei von zugesetzten Emulgatoren ist.

14. Brotteig nach Anspruch 9, wobei das Brot im Wesentlichen frei von zugesetztem Fett ist.

15. Brotteig nach Anspruch 9, wobei das Brot im Wesentlichen frei von zugesetztem Zucker ist.

16. Brotteig nach Anspruch 9, wobei das Brot im Wesentlichen frei von zugesetzten Verdickungsmitteln ist.

17. Brotteig nach Anspruch 9, wobei das komplexe Enzymgemisch ferner wenigstens ein weiteres Enzym, ausgewählt aus der Gruppe von Amyloglucosidasen, Glycolipasen, Hemicellulasen und Lipasen, umfasst.

18. Brotteig nach Anspruch 17, wobei das komplexe Enzymgemisch eine Lipase von *Rhizopus oryzae* umfasst.

19. Verfahren zur Herstellung von Brot, das das Formen eines Teiges, wie in Anspruch 9 beansprucht, und Backen des Teiges umfasst.

20. Brotverbesserungszusammensetzung, die ein komplexes Enzymgemisch, umfassend eine maltogene Amylase, ein pilzliche Amylase, ausgewählt aus Amylasen von Aspergillus oryzae und Amylasen von Aspergillus niger, eine bakterielle Amylase, eine Phospholipase, eine Peptidase, eine Cellulase, eine Glucoseoxidase, eine Mannase, eine Pentosanase und eine Xylanase, umfasst.

21. Brotverbesserizngszusammensetzung nach Anspruch 20, die eine wirksame Menge eines Brot-aromatisierenden Mittels oder eines Brotaroma-verstärkenden Mittels umfasst.

22. Brotverbesserungszusammensetzung nach Anspruch 20, wobei das komplexe Enzymgemisch ferner wenigstens ein weiteres Enzym, ausgewählt aus der Gruppe von Amyloglucosidasen, Glycolipasen, Hemicellulasen und Lipasen, umfasst.

23. Brotverbesserungszusammensetzung nach Anspruch 20, umfassend Lipase von *Rhizopus oryzae.*

24. Brot, das durch ein Verfahren nach Anspruch 19 erhältlich ist.

25. Brot nach Anspruch 24, das im Wesentlichen frei von zugesetztem Fett ist.

26. Brot nach Anspruch 25, das im Wesentlichen frei von zugesetzten Verdickungsmitteln ist.

## Revendications

1. Procédé de production de pain, le procédé pouvant être approprié pour obtenir un pain ayant une durée de conservation d'au moins quinze jours, le procédé comprenant les étapes consistant à :
- fournir une pâte à base de farine,
- ajouter à la pâte ou à un constituant de la pâte un mélange d'enzymes complexe, ledit mélange d'enzymes complexe comprenant une amylase maltogène, une amylase fongique choisie parmi les amylases d'Aspergillus oryzae et les amylases d'Aspergillus niger, une amylase bactérienne, une phospholipase, une peptidase, une cellulase, une glucose-oxydase, une mannase, une pentosanase et une xylanase ; et
- ajouter une quantité efficace d'un aromatisant de pain, d'un agent réhausseur de saveur du pain ou d'un précurseur de celui-ci à la pâte ou à un constituant de la pâte.

2. Procédé selon la revendication 1, dans lequel la quantité totale du mélange d'enzymes complexe et des enzymes additionnelles est de 100 parties par million (ppm) à 1 000 ppm, sur la base du poids de la farine.

3. Procédé selon la revendication 1, dans lequel la quantité totale du mélange d'enzymes complexe et des enzymes additionnelles est de 250 ppm à 400 ppm.

4. Procédé selon la revendication 1, dans lequel le pain est essentiellement dépourvu d'émulsifiant ajouté.

5. Procédé selon la revendication 1, dans lequel le pain est essentiellement dépourvu de matière grasse ajoutée.

6. Procédé selon la revendication 1, dans lequel le pain est essentiellement dépourvu d'épaississant ajouté.

7. Procédé selon la revendication 1, dans lequel le mélange d'enzymes complexe comprend en outre au moins une autre enzyme choisie dans le groupe des amylo-glucosidases, glycolipases, hémicellulases et lipases.

8. Procédé selon la revendication 7, dans lequel le mélange d'enzymes complexe comprend la lipase de *Rhizopus oryzae.*

9. Pâte à pain comprenant un mélange d'enzymes complexe comprenant une amylase maltogène, une amylase fongique choisie parmi les amylases d'Aspergillus oryzae et les amylases d'Aspergillus niger, une amylase bactérienne, une phospholipase, une peptidase, une cellulase, une glucose-oxydase, une mannase, une pentosanase et une xylanase.

10. Pâte à pain selon la revendication 9, dans laquelle la quantité totale du mélange d'enzymes complexe et des enzymes additionnelles est de 100 ppm à 1 000 ppm.

11. Pâte à pain selon la revendication 9, dans laquelle la quantité totale du mélange d'enzymes complexe est de 250 ppm à 400 ppm, sur la base du poids de la farine.

12. Pâte à pain selon la revendication 10, comprenant une quantité efficace d'un aromatisant de pain ou d'un agent réhausseur de saveur du pain.

13. Pâte à pain selon la revendication 9, dans laquelle le pain est essentiellement dépourvu d'émulsifiant ajouté.

14. Pâte à pain selon la revendication 9, dans laquelle le pain est essentiellement dépourvu de matière grasse ajoutée.

15. Pâte à pain selon la revendication 9, dans laquelle le pain est essentiellement dépourvu de sucre ajouté.

16. Pâte à pain selon la revendication 9, dans laquelle le pain est essentiellement dépourvu d'épaississants ajoutés.

17. Pâte à pain selon la revendication 9, dans laquelle le mélange d'enzymes complexe comprend en outre au moins une autre enzyme choisie dans le groupe des amylo-glucosidases, glycolipases, hémicellulases et lipases.

18. Pâte à pain selon la revendication 17, dans laquelle le mélange d'enzymes complexe comprend la lipase de *Rhizopus oryzae.*

19. Procédé de production de pain, qui comprend la formation d'une pâte selon la revendication 9 et la cuisson de la pâte.

20. Composition améliorant le pain comprenant un mélange d'enzymes complexe comprenant une amylase maltogène, une amylase fongique choisie parmi les amylases d'Aspergillus oryzae et les amylases d'Aspergillus niger, une amylase bactérienne, une phospholipase, une peptidase, une cellulase, une glucose-oxydase, une mannase, une pentosanase et une xylanase.

21. Composition améliorant le pain selon la revendication 20, comprenant une quantité efficace d'un aromatisant du pain ou d'un agent réhausseur de saveur du pain.

22. Composition améliorant le pain selon la revendication 20, dans laquelle le mélange d'enzymes complexe comprend en outre au moins une autre enzyme choisie dans le groupe des amylo-glucosidases, glycolipases, hémicellulases et lipases.

23. Composition améliorant le pain selon la revendication 20, comprenant la lipase de *Rhizopus oryzae.*

24. Pain pouvant être obtenu par un procédé selon la revendication 19.

25. Pain selon la revendication 24, essentiellement dépourvu de matière grasse ajoutée.

26. Pain selon la revendication 25, essentiellement dépourvu d'épaississant ajouté.
